# EUROPÄISCHE PATENTSCHRIFT

(11) **EP 2 617 335 B1**
(45) Veröffentlichungstag und Bekanntmachung des Hinweises auf die Patenterteilung: **09.04.2014**
(21) Anmeldenummer: 12199407.3
(22) Anmeldetag: 27.12.2012
(51) Int. Cl.: A47J 31/60, A47J 31/52

(54) **Kaffeeautomat**
Coffee machine
Automate à café

(30) Priorität: 19.01.2012 DE 102012200760
(43) Veröffentlichungstag der Anmeldung: 24.07.2013
(73) Patentinhaber: BSH Bosch und Siemens Hausgeräte GmbH, 81739 München (DE)
(72) Erfinder: Hafner, Ruth, 83352 Altenmarkt a.d. Alz (DE)

(56) Entgegenhaltungen:
- WO-A1-2007/000195
- DE-U1-202005 014 588

## Beschreibung

Die vorliegende Erfindung betrifft einen Kaffeeautomaten, insbesondere einen Espresso-/Kaffeevollautomaten, mit einer unterhalb eines Getränkeauslaufs gelegenen Abstellfläche gemäß dem Oberbegriff des Anspruchs 1. Ein solcher Kaffeeautomat ist aus dem Dokument DE 20 2005 014588 U1 bekannt.

Espresso-/Kaffeevollautomaten bzw. Einbauvollautomaten haben in der Regel eine Abstellfläche unterhalb des Getränkeauslaufs, auf der Tassen, Gläser bzw. Behälter zur Getränkeaufnahme abgestellt werden können. Die Abstellfläche wird dabei durch eine Abdeckung gebildet, die eine darunterliegende Tropfschale abdeckt. Aufgrund der Gerätekonstruktionen ist die Abstellfläche jedoch häufig verspritzt und schmutzig und dadurch unansehlich. Die Abstellflächen selbst sind in der Regel so gestaltet, dass Öffnungen bzw. Löcher vorhanden sind, durch welche Spülwasser in die darunterliegende Tropfschale abfließen kann, sofern der Kaffeeautomat, beispielsweise beim Ein- oder Ausschalten spült. In vielen Fällen kommt es jedoch vor, dass beim Spülen das "Spülwasser" nicht genau in die Löcher trifft bzw. das Spülwasser über die Löcher hinausspritzt. Wird darüber hinaus vergessen, einen Getränkebehälter während des Getränkezubereitungsvorgangs auf der Abstellfläche abzustellen, tropft das Getränk ebenfalls auf die Abstellfläche und verschmutzt diese. Will der Kunde seine Tasse nicht in die Flüssigkeit stellen bzw. seinen Kaffeeautomaten nach dem Ausschalten nicht schmutzig zurückgelassen, so muss er die Abstellfläche manuell abwischen und reinigen.

Die vorliegende Erfindung beschäftigt sich daher mit dem Problem, für einen Kaffeeautomaten eine verbesserte oder zumindest eine alternative Ausführungsform anzugeben, die sich insbesondere durch einen deutlich verbesserten Hygienestandard auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, an einem herkömmlichen Kaffeeautomaten, beispielsweise einem Espresso-/Kaffeevollautomaten, eine motorisch betätigte Reinigungseinrichtung vorzusehen, mit welcher eine Abstellfläche, die üblicherweise unterhalb eines Getränkeauslaufs angeordnet ist, automatisch oder nach Bedarf selbsttätig gereinigt werden kann. Die Abstellfläche dient dabei üblicherweise als Abdeckung einer darunterliegenden Tropfschale und ist beispielsweise aus Metall oder Kunststoff ausgebildet. Mit der erfindungsgemäßen motorisch betätigten Reinigungseinrichtung kann einem Benutzer des Kaffeeautomatens ein manuelles Reinigen per Hand erspart werden, wobei die erfindungsgemäße Reinigungseinrichtung unterschiedlich angesteuert werden kann. Beispielsweise kann die Reinigungseinrichtung einen Reinigungsvorgang nach jedem Spülen des Kaffeeautomatens oder lediglich bei Bedarf, beispielsweise durch den Nutzer selbst gestartet, ausführen. In allen denkbaren Fällen kann durch die erfindungsgemäße Reinigungseinrichtung jedoch eine saubere Abstellfläche geschaffen werden, welche nicht nur den Hygienestandard steigert, sondern zusätzlich auch den optischen Eindruck deutlich verbessert.

Bei einer vorteilhaften Weiterbildung der erfindungsgemäßen Lösung weist die motorisch betätigte Reinigungseinrichtung einen Wischer oder eine Lippe, beispielsweise in der Art eine Rakels, auf, die in Quer- oder Tiefenrichtung des Kaffeeautomatens über die Abstellfläche verfahrbar ist und diese dadurch reinigt. Der Wischer bzw. die Lippe kann zum Start des Reinigungsvorgangs in eine definierte Anfangsstellung fahren bzw. sich in einer derartigen Anfangsstellung befinden. Dies kann beispielsweise seitlich oder vorne über der Abstellfläche sein, wobei das Anfahren der Startposition ausschließlich dann erfolgt, wenn die Abstellfläche frei ist. Das Abziehen bzw. das Abwischen der Abstellfläche kann dabei von vorne nach hinten oder aber von rechts nach links erfolgen. Zweckmäßig ist zusätzlich eine Erfassungseinrichtung vorgesehen, die eine Belegung der Abstellfläche, beispielsweise mit einer Tasse, erfasst und die Reinigungseinrichtung ausschließlich dann aktiviert, sofern nichts auf der Abstellfläche abgestellt ist. Sowohl das Starten des Reinigungsvorgangs als auch beispielsweise das Anfahren der Startposition erfolgt somit erst nach Freigabe durch die Erfassungseinrichtung, sofern diese erkannt hat, dass die Abstellfläche frei und damit für einen Reinigungsvorgang geeignet ist. Dies kann über eine optische Erfassung, beispielsweise einen optischen Sensor, und/oder über einen Gewichtssensor erfolgen, der das Gewicht der Abstellfläche, das heißt insbesondere das Gewicht eines Tropfbleches erkennt und erfasst. Ist dabei noch ein Behälter auf dem Tropfblech, das heißt auf der Abstellfläche, abgestellt, so erfasst der Gewichtssensor ein von einem vordefinierten Ausgangsgewicht abweichendes Gewicht und erkennt dadurch, dass die Abstellfläche nicht für einen Reinigungsvorgang vorbereitet ist.

Zweckmäßig ist die Lippe der motorisch betätigten Reinigungseinrichtung derart ausgebildet, dass sie noch auf der Abstellfläche vorhandene Flüssigkeit zu einer Ablauföffnung schiebt. Hierdurch kann nicht nur die Abstellfläche an sich sauber abgezogen werden, wodurch beispielsweise eine Nachtrocknen entbehrlich ist, sondern die auf der Abstellfläche noch versehentlich vorhandene Flüssigkeit wird zudem ordnungsgemäß in die darunterliegende Tropfschale befördert. Weist die Abstellfläche beispielsweise Rillen auf, ist demzufolge also profiliert, kann die zugehörige Lippe der Reinigungseinrichtung beispielsweise komplementär dazu ausgebildete Nasen bzw. ein komplementär dazu ausgebildetes Profil aufweisen, wodurch auch ein profiliertes Tropfblech, das heißt eine profilierte Abstellfläche, einwandfrei und sauber zu reinigen sind. Bei derartigen profilierten Abstellflächen bietet sich zudem der Vorteil, dass der komplementär dazu ausgebildete Wischer durch die Rillen in der Abstellfläche eine Führung erfährt.

Bei einer vorteilhaften Weiterbildung der erfindungsgemäßen Lösung ist eine Steuerungseinrichtung zum Aktivieren und Deaktivieren der Reinigungseinrichtung manuell bedienbar oder derart ausgebildet, dass die Reinigungseinrichtung automatisch nach jedem Getränkezubereitungsvorgang und/oder beim Ein-/Ausschalten des Getränkeautomatens bzw. des Kaffeeautomatens aktiviert bzw. deaktiviert wird. Mit der erfindungsgemäßen Steuerungseinrichtung bleibt es somit dem Nutzer des Kaffeeautomatens selbst überlassen, wie er die jeweiligen Reinigungsvorgänge durchführen will, so dass diese beispielsweise ausschließlich auf Anforderung des Nutzers oder aber auch automatisch in bestimmten Intervallen, beispielsweise nach jedem Getränkezubereitungsvorgang, gestartet werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: einen erfindungsgemäßen Kaffeeautomaten mit einer erfindungsgemäßen Reinigungseinrichtung,
- Fig. 2: eine Schnittdarstellung durch einen Wischer bzw. eine Lippe der Reinigungseinrichtung bei profilierter Abstellfläche.

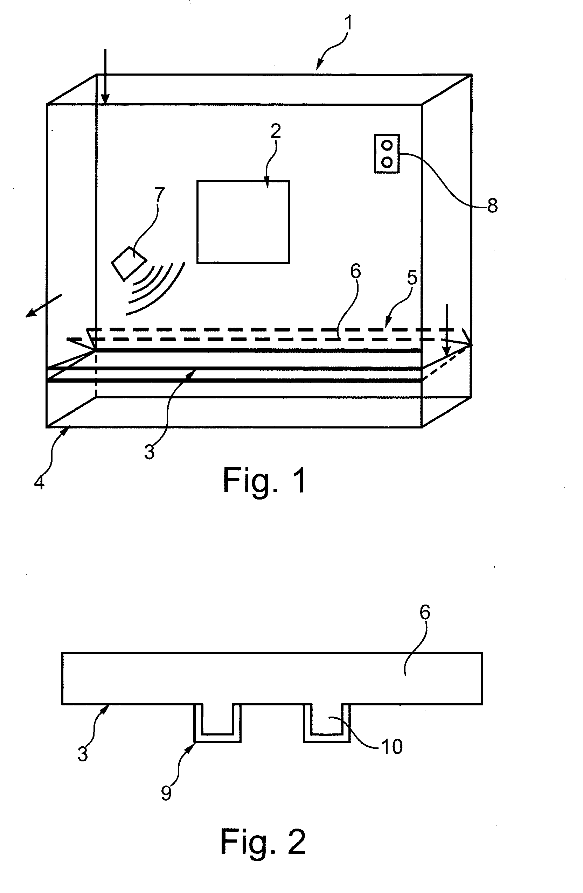

Entsprechend der Fig. 1, weist ein erfindungsgemäßer Kaffeeautomat 1, der generell als Espresso-/Kaffeevollautomat oder auch als Getränkeautomat ausgebildet sein kann, eine unterhalb eines Getränkeauslaufs 2 gelegene Abstellfläche 3 auf, die insbesondere als Abdeckung einer darunter angeordneten Tropfschale 4 dient. Bei der Getränkezubereitung bzw. auch beim Spülen des Getränkeauslaufs 2 kann es dabei vorkommen, dass Flüssigkeit auf die Abstellfläche 3 gelangt und diese verunreinigt, insbesondere verspritzt. Bisher musste deshalb die Abstellfläche 3 manuell gereinigt werden, oder aber verblieb in ungereinigtem Zustand, was weder hygienisch noch optisch ansprechend war.

Erfindungsgemäß ist deshalb eine motorisch betätigte Reinigungseinrichtung 5 vorgesehen, mit der die Abstellfläche 3 gereinigt, insbesondere gewischt bzw. abgezogen werden kann. Hierzu weist die Reinigungseinrichtung 5 einen Wischer oder eine Lippe 6, (vgl. Fig. 2) auf, die in Querrichtung oder in Tiefenrichtung des Kaffeeautomatens 1 über die Abstellfläche 3 verfahrbar ist und diese dadurch reinigt. Die Lippe 6 wird dabei beim Start des Reinigungsvorgangs in ihre Ausgangsstellung verfahren und liegt in dieser, beispielsweise vorne, auf der Abstellfläche 3 auf. Während des Reinigungsvorganges verfährt die Lippe 6 nach hinten und saugt damit auf der Abstellfläche 3 vorhandene Flüssigkeit auf, bzw. schiebt diese zu entsprechenden, nicht gezeigten Öffnungen in der Abstellfläche 3, wodurch die Flüssigkeit in die darunterliegende Tropfschale 4 abfließen kann. Dabei kann selbstverständlich die Reinigungseinrichtung 5 bzw. deren Lippe 6 nicht nur von vorne nach hinten, sondern beispielsweise auch von rechts nach links oder umgekehrt zum Abziehen der Abstellfläche 3 verfahren werden.

Die Reinigung kann dabei prinzipiell durch ein Aufsaugen der auf der Abstellfläche 3 vorhandenen Flüssigkeit erfolgen, wobei in diesem Fall der Wischer in der Art eines Schwamms ausgebildet ist, oder aber die Flüssigkeit wird lediglich mittels der Lippe 6 in zugehörige Öffnungen der Abstellfläche 3 geschoben.

Vor dem Starten des eigentlichen Reinigungsvorgangs muss zudem gewährleistet sein, dass die Abstellfläche 3 frei ist und dadurch gereinigt werden kann. Hierzu ist erfindungsgemäß eine Erfassungseinrichtung 7 vorgesehen, die beispielsweise einen nicht gezeigten optischen Sensor und/oder einen Gewichtssensor aufweist, wobei der optische Sensor eine Oberfläche der Abstellfläche 3 erfasst, wogegen der Gewichtssensor das Gewicht der Abstellfläche 3, das heißt beispielsweise eines Tropfblechs, erfasst, und bei darauf abgestelltem Getränkebehälter den Start des Reinigungsvorgangs unterbindet.

Ebenfalls vorgesehen sein kann eine Steuerungseinrichtung 8, mittels welcher die motorisch betätigte Reinigungseinrichtung 5 aktiviert bzw. deaktiviert werden kann. Die Steuerungseinrichtung 8 kann dabei manuell bedienbar sein oder aber die Reinigungseinrichtung 5 automatisch starten bzw. stoppen, insbesondere beispielsweise nach jedem Getränkezubereitungsvorgang. Die Lippe 6 bzw. ein Wischer der Reinigungseinrichtung 5 kann darüber hinaus austauschbar ausgebildet sein, wodurch die Reinigungsfunktion auch langfristig aufrechterhalten werden kann.

Betrachtet man die Fig. 2, so kann man erkennen, dass die Abstellfläche 3 profiliert ist, insbesondere Rillen 9, aufweist, wobei die Lippe 6 bzw. der Wischer komplementär dazu ausgebildete Nasen 10 besitzt. Diese Nasen 10 können insbesondere auch eine Führung der Lippe 6 auf der Abstellfläche 3 unterstützen bzw. bilden. Generell kann aber selbstverständlich auch das Material der Lippe 6 bzw. des Wischers so weich ausgebildet sein, dass sich dieses in Rillen 9 der Abstellfläche 3 elastisch hineinverformt und dadurch diese reinigt.

Mit der erfindungsgemäßen motorisch betätigten Reinigungseinrichtung 5 kann die Abstellfläche 3, die bisher entweder manuell gereinigt werden musste oder aber verspritzt zurückblieb, einfach und insbesondere auch automatisch gereinigt werden, wodurch der Hygienestandard und das optische Erscheinungsbild deutlich verbessert werden können.

### Bezugszeichenliste

- 1: Kaffeeautomat
- 2: Getränkeauslauf
- 3: Abstellfläche
- 4: Tropfschale
- 5: Reinigungseinrichtung
- 6: Lippe/Wischer
- 7: Erfassungseinrichtung
- 8: Steuerungseinrichtung
- 9: Rille
- 10: Nase

## Patentansprüche

1. Kaffeeautomat (1), insbesondere ein Espresso-/Kaffeevollautomat, mit einer unterhalb eines Getränkeauslaufs (2) gelegenen Abstellfläche (3), die insbesondere als Abdeckung einer darunterliegenden Tropfschale (4) dient,
**dadurch gekennzeichnet,**
**dass** der Kaffeeautomat (1) eine motorisch betätigte Reinigungseinrichtung (5) aufweist, mit der die Abstellfläche (3) gereinigt werden kann.

2. Kaffeeautomat nach Anspruch 1,
**dadurch gekennzeichnet,**
**dass** die Reinigungseinrichtung (5) einen Wischer oder eine Lippe (6) aufweist, die in Quer- oder Tiefenrichtung des Kaffeeautomatens (1) über die Abstellfläche (3) verfahrbar ist und diese dadurch reinigt.

3. Kaffeeautomat nach Anspruch 1 oder 2,
**dadurch gekennzeichnet,**
**dass** eine Erfassungseinrichtung (7) vorgesehen ist, die eine Belegung der Abstellfläche (3), beispielsweise mit einer Tasse erfasst, und die Reinigungseinrichtung (5) ausschließlich dann aktiviert, sofern nichts auf der Abstellfläche (3) abgestellt ist.

4. Kaffeeautomat nach Anspruch 3,
**dadurch gekennzeichnet,**
**dass** die Erfassungseinrichtung (7) einen optischen Sensor und/oder einen Gewichtssensor aufweist, wobei der optische Sensor eine Oberfläche der Abstellfläche (3) erfasst, wogegen der Gewichtssensor das Gewicht der Abstellfläche (3), das heißt eines Tropfblechs, erfasst.

5. Kaffeeautomat nach einem der Ansprüche 2 bis 4,
**dadurch gekennzeichnet,**
**dass** der Wischer oder die Lippe (6) der Reinigungseinrichtung (5) derart ausgebildet ist, dass sie noch auf der Abstellfläche (3) vorhandene Flüssigkeit aufsaugt oder zu einer Ablauföffnung schiebt.

6. Kaffeeautomat nach einem der Ansprüche 1 bis 5,
**dadurch gekennzeichnet,**
**dass** eine Steuerungseinrichtung (8) zum Aktivieren und Deaktivieren der Reinigungseinrichtung (5) vorgesehen ist.

7. Kaffeeautomat nach Anspruch 6,
**dadurch gekennzeichnet,**
**dass** die Steuerungseinrichtung (8) manuell bedienbar ist oder derart ausgebildet ist, dass sie die Reinigungseinrichtung (5) automatisch nach jedem Getränkezubereitungsvorgang aktiviert.

8. Kaffeeautomat nach einem der Ansprüche 2 bis 7,
**dadurch gekennzeichnet,**
**dass** die Lippe (6) und/oder der Wischer austauschbar sind.

9. Kaffeeautomat nach einem der Ansprüche 2 bis 8,
**dadurch gekennzeichnet,**
**dass** die Abstellfläche (3) profiliert ist, insbesondere Rillen (9) aufweist, wobei die Lippe (6) und/oder der Wischer komplementär dazu ausgebildete Nasen (10) besitzt.

## Claims

1. Automated coffee machine (1), in particular a fully-automated espresso/coffee machine, with a shelf (3) positioned below a beverage outlet (2), which in particular serves as a cover for a drip tray (4) underneath,
**characterised in that**
the automated coffee machine (1) comprises a motor-powered cleaning unit (5), with which the shelf (3) can be cleaned.

2. Automated coffee machine according to claim 1,
**characterised in that**
the cleaning unit (5) comprises a wiper or a lip (6), which is moveable over the shelf (3) in a transverse or downward direction in relation to the automated coffee machine (1) and thereby cleans the shelf.

3. Automated coffee machine according to claim 1 or 2,
**characterised in that**
a detection unit (7) is provided for, which detects occupancy of the shelf (3), for example with a cup, and then exclusively activates the cleaning unit (5) provided that nothing is placed on the shelf (3).

4. Automated coffee machine according to claim 3,
**characterised in that**
the detection unit (7) has an optical sensor and/or a weight sensor, with the optical sensor detecting a surface of the shelf (3) and the weight sensor detecting the weight of the shelf, meaning a drip tray arrangement.

5. Automated coffee machine according to one of claims 2 to 4,
**characterised in that**
the wiper or the lip (6) of the cleaning unit (5) is embodied in such a way that it absorbs liquid still remaining on the shelf (3) or pushes it into an outlet hole.

6. Automated coffee machine according to one of claims 1 to 5,
**characterised in that**
a control unit (8) is provided for activating and deactivating the cleaning unit (5).

7. Automated coffee machine according to claim 6,
**characterised in that**
the control unit (8) is manually operable or embodied in such a way that it activates the cleaning unit (5) automatically after each beverage preparation process.

8. Automated coffee machine according to one of claims 2 to 7,
**characterised in that**
the lip (6) and/or the wiper are replaceable.

9. Automated coffee machine according to one of claims 2 to 8,
**characterised in that**
the shelf (3) is profiled and in particular has grooves (9), with the lip (6) and/or the wiper having lugs (10) that are complementary thereto.

## Revendications

1. Distributeur automatique de café (1), en particulier distributeur intégralement automatique d'expresso / de café, avec une surface de pose (3) située en-dessous d'une sortie de boissons (2), laquelle surface sert en particulier de protection à un égouttoir (4) sur lequel elle se trouve, **caractérisé en ce que** le distributeur automatique de café (1) présente un dispositif de nettoyage actionné par moteur (5), lequel permet de nettoyer la surface de pose (3).

2. Distributeur automatique de café selon la revendication 1, **caractérisé en ce que** le dispositif de nettoyage (5) présente une raclette ou une lèvre (6), laquelle se déplace transversalement ou en profondeur par rapport au distributeur automatique de café (1) pardessus la surface de pose (3) et la nettoie.

3. Distributeur automatique de café selon la revendication 1 ou 2, **caractérisé en ce qu'**un dispositif de saisie (7) est prévu, lequel saisit l'occupation de la surface de pose (3), par exemple par une tasse, et active le dispositif de nettoyage (5) uniquement lorsque la surface de pose (3) est dégagée.

4. Distributeur automatique de café selon la revendication 3, **caractérisé en ce que** le dispositif de saisie (7) présente un capteur optique et/ou un capteur de poids, dans lequel le capteur optique saisit une surface de la surface de pose (3) tandis que le capteur de poids saisit le poids de la surface de pose (3), c'est-à-dire d'un égouttoir.

5. Distributeur automatique de café selon l'une des revendications 2 à 4, **caractérisé en ce que** la raclette ou la lèvre (6) du dispositif de nettoyage (5) est exécutée de manière à ce qu'elle aspire le liquide se trouvant encore sur la surface de pose (3) ou le pousse vers un orifice d'écoulement.

6. Distributeur automatique de café selon l'une des revendications 1 à 5, **caractérisé en ce qu'**un dispositif de commande (8) pour activer et désactiver le dispositif de nettoyage (5) est prévu.

7. Distributeur automatique de café selon la revendication 6, **caractérisé en ce que** le dispositif de commande (8) est utilisable manuellement ou exécuté de manière à ce qu'il active le dispositif de nettoyage (5) automatiquement après chaque processus de préparation de boisson.

8. Distributeur automatique de café selon l'une des revendications 2 à 7, **caractérisé en ce que** la lèvre (6) et/ou la raclette sont remplaçables.

9. Distributeur automatique de café selon l'une des revendications 2 à 8, **caractérisé en ce que** la surface de pose (3) est profilée et présente en particulier des rainures (9), dans lequel la lèvre (6) et / ou la raclette possède des nez (10) adaptés à ces dernières.
